# EUROPEAN PATENT SPECIFICATION

(11) **EP 1 066 633 B1**
(45) Date of publication and mention of the grant of the patent: **28.01.2009**
(21) Application number: 99970202.0
(22) Date of filing: 07.10.1999
(51) Int. Cl.: G11B 20/10

(54) **DEVICE AND METHOD FOR REPRODUCING DATA**
VORRICHTUNG UND VERFAHREN ZUR WIEDERGABE VON DATEN
DISPOSITIF ET PROCEDE DE REPRODUCTION DE DONNEES

(30) Priority: 08.10.1998 JP 28617798; 19.10.1998 JP 29715998; 19.10.1998 JP 29714298
(43) Date of publication of application: 10.01.2001
(73) Proprietor: Panasonic Corporation, Kadoma-shi Osaka 571-8501 (JP)
(72) Inventor: TAGAWA, Kenji, Katano-shi, Osaka 576-0021 (JP); MINAMI, Masataka, California 91504 (US); KOZUKA, Masayuki, California 91008 (US); AOYAMA, Shoichi, Hirakata-shi, Osaka 573-1114 (JP); TOKUDA, Katsumi, Toluca Lake 304 CA 91604 (US); HIRATA, Noboru, Katano-shi, Osaka 576-0065 (JP)
(74) Representative: Grünecker, Kinkeldey, Stockmair & Schwanhäusser Anwaltssozietät
(86) International application number: PCT/JP1999/005516
(87) International publication number: WO 2000/021087

(56) References cited:
- EP-A- 0 561 685
- EP-A- 0 668 695
- EP-A- 0 672 991
- EP-A- 0 766 471
- EP-A- 0 788 080
- EP-A- 0 798 892
- EP-A- 0 853 315
- MARC A. KAPLAN: "IBM Cryptolopes, SuperDistribution and Digital Rights Management" WORKING PAPER, V.1.3.0, [Online] 30 December 1996 (1996-12-30), pages 1-7, XP002132994 Retrieved from the Internet: <URL:http://www.research.ibm.com/people/k/ kaplan/cryptolope-docs/crypap.html> [retrieved on 2000-03-10]
- MORI R ET AL: "SUPERDISTRIBUTION: AN ELECTRONIC INFRASTRUCTURE FOR THE ECONOMY OF THE FUTURE" JOHO SHORI GAKKAI RONBUNSHI - TRANSACTIONS OF INFORMATION PROCESSING SOCIETY OF JAPAN,JP,TOKYO, vol. 38, no. 7, 1 July 1997 (1997-07-01), pages 1465-1472, XP002072402 ISSN: 0387-5806
- "MULTIMEDIA MIXED OBJECT ENVELOPES SUPORTING A GRADUATED FEE SCHEME VIA ENCRYPTION" IBM TECHNICAL DISCLOSURE BULLETIN,US,IBM CORP. NEW YORK, vol. 37, no. 3, 1 March 1994 (1994-03-01), pages 413-417, XP000441522 ISSN: 0018-8689

## Description

### Technical Field

The present invention relates to a recording medium that stores a content (a digital production with copyright) such as music, a device that records a content onto a recording medium, a device that plays a content recorded on a recording medium, a device that produces a package by packaging a plurality of contents, a computer-readable recording medium, a recording method, a playback method, and a packaging method.

### Background Art

### First Background Technology

Recently, a great deal of discussion has taken place between major music companies, audio device manufacturers, and intellectuals about a next-generation format for distributing copyrighted music. At present, all forms of music, whether pop, rock, or classical, are sold having been recorded on a recording medium such as a CD (Compact Disc) or a magnetic tape. This method whereby consumers obtain recorded music by buying a recording medium is commonplace throughout the world.

Much attention is currently being focused on electronic music distribution as an alternative to conventional forms of distribution that use a recording medium. Electronic music distribution refers to the fee-based delivery of a music "content" via the ever-expanding Internet. Here, a "content" refers to a copyrighted production in a digital form, so that a "music content" is music in a digital form. One characteristic of this electronic music distribution is that music contents can be ordered and paid for using electronic commerce. In detail, music companies can introduce a variety of music contents on their home pages, so that consumers can browse a variety of music contents by accessing the home pages of the music companies. On finding a desired music content, the consumer sends the necessary information, such as an order for the music content and a user ID, to a music company that runs the home page, and the music company charges the consumer for the music content via a bank account corresponding to a credit card number that the user has registered in advance. After the consumer has been charged, the consumer downloads the music content into his computer. In this way, a consumer can obtain a desired music content.

Electronic music distribution allows the consumer to interactively select the music contents to be downloaded. This greatly facilitates the procedure by which consumers buy music and so can increase the sales of record companies. As one example, a record company can use a home page that introduces a popular new release to promote other related releases by the same artist and/or the same songwriter. Since there is a high probability of the consumer also being interested in these other releases, there is a good chance that the consumer will make further purchases.

At present, however, the required infrastructure for electronic music distribution has not been fully implemented, so that consumers face various difficulties in buying music electronically.

One fundamental requirement for the electronic distribution of music contents is the provision of highspeed communication lines that can transfer the several megabytes of data in a music content in a short time. At present, most users access the Internet via public networks whose transfer rate is totally insufficient for this purpose. This means that downloading a number of music contents via a public network takes a long time. When doing so, the consumer will incur a large communication cost that may even exceed the cost of the music contents. This naturally discourages consumers from purchasing music electronically, as does the long time the consumer has to wait. This can lead to consumers canceling a purchase while a content is still being downloaded.

As with electronic music retailing, conventional retail methods using a recording medium can promote releases related to a given product. This is traditionally done by printing promotional material and sales information for other releases on the jacket of a given product. If this promotional material succeeds in raising the interest of the consumer, the consumer may go on to purchase a separate recording medium that includes the related release by calling in at a record store.

The retail price of music media is determined by various costs related to the manufacture and distribution of the media. This means that a consumer who purchases a recording media storing a new release and a recording medium storing related music has to pay for the relatively high costs of the manufacture and distribution of two recording medium. As stated above, consumers have to call in at a record store to buy the related releases. Since consumers who are interested in related releases cannot buy them instantaneously, there is the danger for record companies that such consumers will no longer want the releases by the time they go to the record store.

### Second Background Technology

As described above, music can be distributed in a variety of ways that include recording onto media and transmission via communication lines such as the Internet.

Various recording media, such as DVD-Audio (Digital Versatile Disc - Audio) discs and CDs, can be used to record music. In general, music recorded on different media is encoded in a different way. Music contents are also often distributed using a broadcast wave via a satellite, a CATV (community antenna television) cable, or the like. Such services are generally fee-based but in some cases music can be provided free of charge for promotional purposes.

However, when distributing the same music using different methods, the music has to be encoded in a number of ways to produce a suitable music content for each distribution method for the following reason. Great differences regarding the provision (or lack) of copyright protection systems, the security of encryption keys, and playback performance exist among old and new playback devices, so that the generation and distribution of a single music content to every kind of playback device would prevent certain playback devices from using their copyright protection systems or making the most of their playback performance.

If a music content is distributed to certain playback devices equipped with copyright protection systems, it may appear wise to encrypt all distributed forms of the music content with a secure encryption key. However, some music contents distributed in this way are samples that are only intended for promotional use and so are not encoded with a high quality. If these contents are also encrypted with a secure encryption key, playback devices that cannot decrypt the contents will not be able to play the sample. This limits the promotional effect of providing samples to consumers.

When a greater number of music contents need to be encoded using different encoding methods for the stated reasons, a supplier of contents is required to manage and distribute the contents with more caution to prevent these contents from being distributed to wrong destinations. For instance, if such a great number of music contents for sale should be mistakenly distributed instead of free promotional contents, this would cause significant damage to a content supplier.

EP 0 766 471 A1 describes a digital broadcast system in which a secrecy level control is set for individual contents out of a plurality of contents from a contents package. The secrecy level commands the encryption/ decryption method to be applied to the content, and is set according to the quality of the content and the complexity of the method to be applied.

In "Multimedia Mixed Object Envelopes supporting a Graduated Fee Scheme via Encryption", IBM Technical Disclosure Bulletin, IBM, vol. 37, no. 3, 1 March 1994, pages 413 -417, a scheme is described for multimedia presentations packaged in multiple segments, allowing the user to pay only for the segments desired. Value-added presentations can be charged additionally, in that the vendor is able to determine the levels of access to the multimedia presentations by applying different cryptographic algorithms and keys. A table is used to associate objects with cryptographic algorithms and keys.

### Disclosure of Invention

The first object of the present invention is to provide a recording medium whereby a consumer who purchased a music content can obtain other related music contents in a convenient way at a low price.

The second object of the present invention is to provide a content packaging method allowing for to transmit music contents to playback devices of different types regardless of the provision (or lack) of copyright protection system, the security of encryption keys, and playback performance of the playback devices.

The objects can be achieved by the features of the independent claims.

### Brief Description of Drawings

These and the other objects, advantages and features of the invention will become apparent from the following description thereof taken in conjunction with the accompanying drawings which illustrate a specific embodiment of the invention.

In the drawings:
FIG. 1A shows the external appearance of an Enhanced-CD;
FIG. 1B shows the data structure of the Enhanced-CD;
FIG. 2A shows the external appearance of a DVD-Audio disc;
FIG. 2B shows a logical format of the DVD-Audio disc;
FIG. 3 shows a plastic case containing a retail recording medium;
FIG. 4 shows the data structure of a container 6;
FIG. 5 shows examples of purchase conditions 12;
FIG. 6 shows how a retail content 3 and a superdistribution content 10 are distributed;
FIGs. 7A-7D show states in which a superdistribution content is recorded from a retail recording medium 200 onto a purchased-copy recording medium 650;
FIG. 8 shows an example of an interactive screen displayed using a playback control script 4 and still image data 5 by a playback device;
FIG. 9 shows the construction of a digital data recording device 100 of the second embodiment;
FIG. 10 is a flowchart showing the processing of the digital data recording device 100;
FIG. 11 shows an internal structure of a digital data recording device 300 of the third embodiment;
FIG. 12 is a flowchart showing the processing of an encoding unit 303 in the digital data recording device 300;
FIG. 13 shows an internal structure of a digital data playback device 400 of the fourth embodiment;
FIG. 14 is a flowchart showing the processing of an encoding unit 303 of the digital data playback device 400;
FIG. 15 shows a variety of methods to distribute content packages according to the fifth embodiment;
FIG. 16 shows internal constructions of a content packaging device 700 and content playback devices 801-809 according to the fifth embodiment;
FIG. 17A shows an example of a first correspondence table;
FIG. 17B shows an example of a second correspondence table;
FIG. 17C shows an example of a table stored in a hardware-grade/decryption correspondence table storage unit according to the fifth embodiment;
FIG. 18 shows a content package packaged by a content packaging unit 709 according to the fifth embodiment;
FIG. 19 shows internal constructions of a content packaging device 700 and content playback devices 801-809 according to the sixth embodiment; and
FIG. 20 shows a content package packaged by a content packaging unit 709 according to the sixth embodiment.

### Best Mode for Carrying Out the Invention

The following describes the recording media, playback devices, and recording devices useful for understanding the present invention with reference to several embodiments. For ease of explanation, the recording media, the playback devices, and the recording devices will be explained separately using the first to sixth embodiments. Only embodiment 5 is an embodiment of the invention.

### First Embodiment

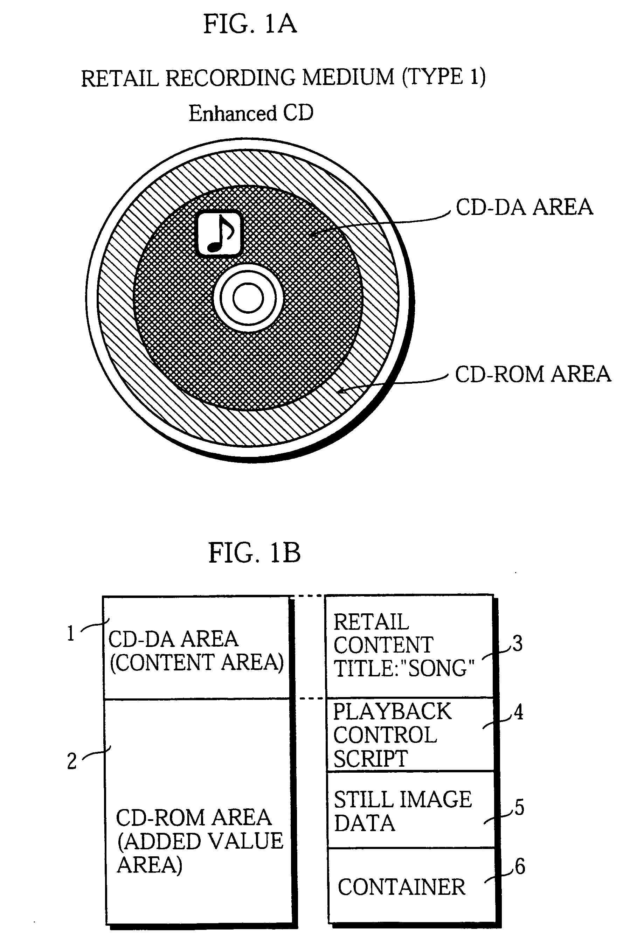

The first embodiment describes a recording medium used in the retailing of music contents. Music contents for sale are called retail contents and are bought and sold having been recorded onto recording media called retail recording media. Two types of retail recording media are used in the present embodiment. The first is an Enhanced-CD, which is a disc made up of an inner region having the same physical structure as a CD such as Compact Disc-Digital Audio (CD-DA) and of an outer region having the same physical structure as a CD-ROM. An Enhanced-CD therefore functions as both a CD-DA and a CD-ROM. FIG. 1A shows the external appearance of an Enhanced-CD, and FIG. 1B shows the data structure of the Enhanced-CD. As shown in FIGs. 1A and 1B, the inner region of the Enhanced-CD is called a CD-DA area, and the outer region is called a CD-ROM area. In terms of function, the CD-DA area can be called a content area 1 as it stores a retail content 3, and the CD-ROM area can be called an added value area 2 as it stores data that adds values to the whole recording medium. This recording medium is a retail recording medium used to sell the retail content 3 stored in the content area 1.

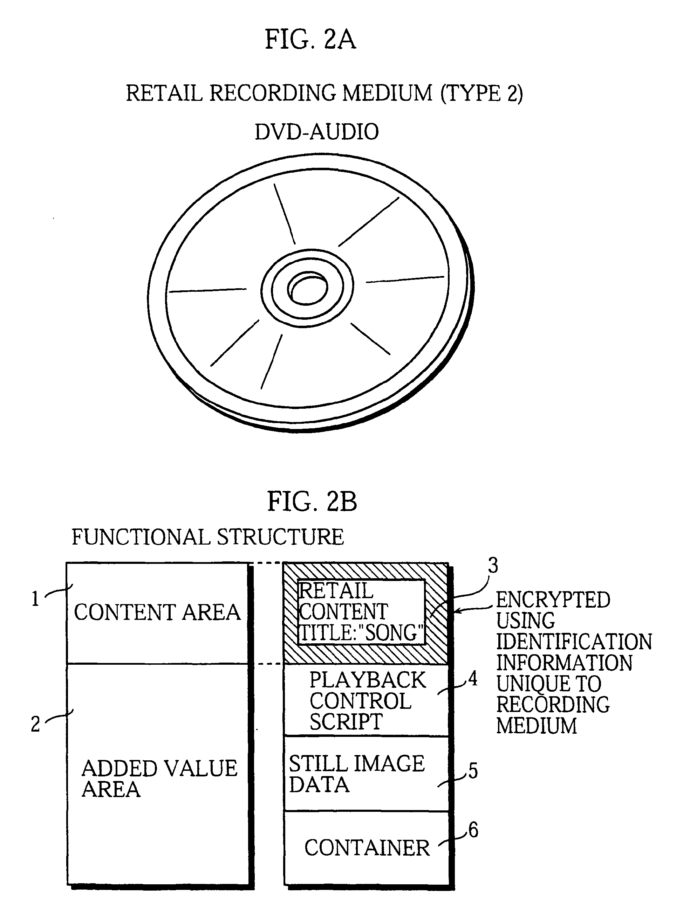

The second type of the recording medium used in the present embodiment is a DVD-Audio disc that stores the retail content 3. FIG. 2A shows the external appearance of the DVD-Audio disc, and FIG. 2B shows the logical format of the DVD-Audio disc. Although the DVD-Audio disc does not have a CD-DA area or a CD-ROM area like the Enhanced-CD disc, it stores a playback control script 4, still image data 5, and a container 6 as different files that can be accessed by a personal computer, and has the same functional data structure as the Enhanced-CD disc, which is to say, the DVD-Audio disc includes a content area 1 storing the retail content 3 and an added value area 2 storing data to add value to the whole recording medium. The major difference between the Enhanced-CD and the DVD-Audio disc is that the retail content 3 is recorded in the content area 1 of the Enhanced-CD as it is, but is recorded in the content area 1 of the DVD-Audio disc having been encrypted using identification information unique to this particular DVD-Audio disc.

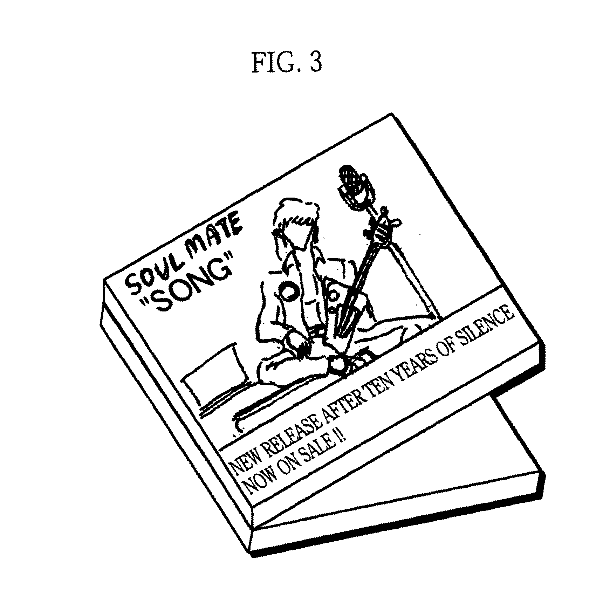

Each of these recording media is packaged in a plastic case along with printed inserts. FIG. 3 shows a plastic case specifically designed for packaging these recording media in the same way as a conventional music CD. When the retail content 3 in the content area is for music entitled "SONG", the title "SONG" and related images are printed on the jacket of the recording medium as shown in FIG. 3.

As stated above, a content area 1 and an added value area 2 exist in both the Enhanced-CD and the DVD-Audio disc. The following explains stored contents of the added value area 2. The right-hand columns in FIGs. 1B and 2B show the stored contents of the added value area 2. As shown in the figures, the added value area 2 stores the playback control script 4, the still image data 5, and the container 6.

The playback control script 4 is information that describes what should be displayed on an interactive screen of a device when a recording medium of the present embodiment is loaded into the device. The playback control script 4 is written in a format such as MACROMEDIA DIRECTOR or HTML. MACROMEDIA DIRECTOR format is used to describe authoring procedures that can be interpreted by software running on MS-WINDOWS or MAC OS, while HTML is often used to write an Web pages that are displayed by browsers.

The still image data 5 is a static image to be displayed on the interactive screen of the device according to the playback control script 4.

A conventional Enhanced-CD stores a playback control script and still image data for displaying information, such as lyrics, or a promotional video of the retail content, or introduction of a fan club, or information on other new releases. However, the playback control script 4 and the still image data 5 in the present embodiment are for display not information on the retail content 3 but information that recommends purchase and playback of a different music content.

For instance, if the retail content 3 is for a new release by a popular artist, the playback control script 4 can display information to recommend purchase and playback of a past hit song by the same artist. From the following explanation, it will become clear what music content in particular is being introduced by the playback control script 4.

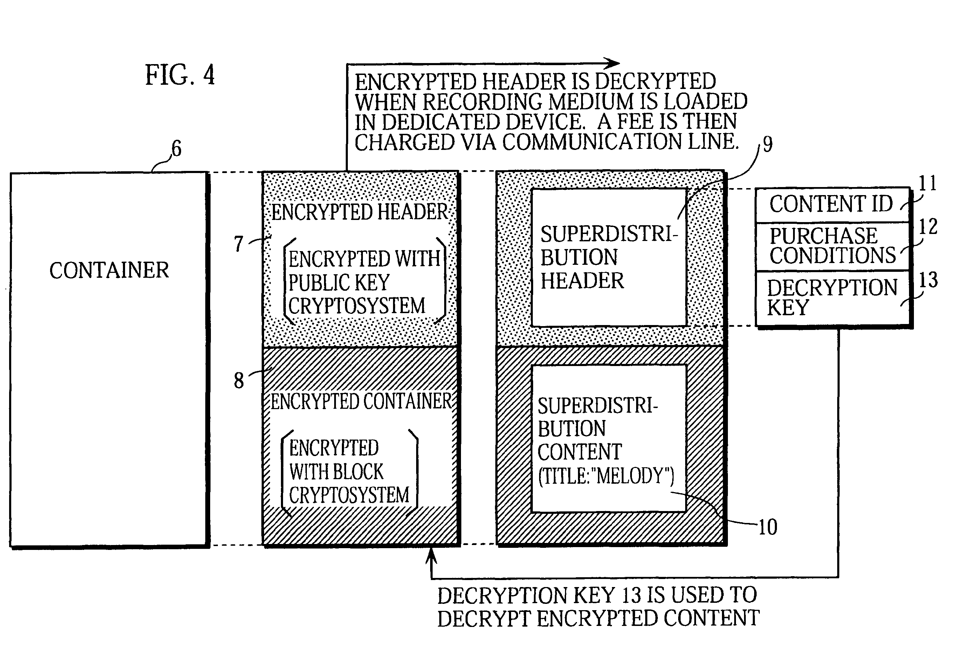

The following explains the container 6 in the added value area 2 contained in both the Enhanced-CD and the DVD-Audio disc of the present embodiment. FIG. 4 shows the construction of the container 6. As shown in the figure, the container 6 includes an encrypted header 7 and an encrypted content 8. The encrypted header 7 is a superdistribution header 9 that has been encrypted, and the encrypted content 8 is a superdistribution content 10 that has been also encrypted.

"Superdistribution" is the name of a method of distributing contents and that is advocated by Ryoichi Mori, Professor Emeritus at University of Tsukuba. In superdistribution, a predetermined superdistribution header is attached to a content to be distributed and sold. Such a superdistribution header contains creditor information indicating a creditor who is to be paid, and purchase information indicating purchase conditions. When a consumer uses this content, the consumer's device interprets the creditor information and the purchase information to create a use record. The consumer reimburses the creditor according to the use record.

The superdistribution header 9 and the superdistribution content 10 are stored in the container 6 with a premise that they are suited to superdistribution. It is this superdistribution content 10 that has been encrypted and stored in the container 6 that is recommended by the still image data 5 and the playback control script 4.

As mentioned above, the superdistribution header 9 indicates confidential information used for securely performing superdistribution, such as the creditor information and the purchase information, which need protection against fraudulent acts such as tampering. For this reason, the superdistribution header 9 in the present embodiment includes a data area that has been encrypted according to a cryptosystem based on a public key encryption algorithm. Note that the whole superdistribution header 9 may be encrypted instead, with this being the case for the following explanation. Widely used public key encryption systems include elliptic curve encryption systems and Rivest, Shamir, Adleman encryption (RSA). Public key cryptosystems are highly secure, since data that has been encrypted with a public key can only be decrypted with a different key. The present embodiment uses a public key cryptosystem to encrypt the superdistribution header 9, but this public key cryptosystem is improved in that a decryption key for decrypting the encrypted superdistribution header 9 is provided to a dedicated device in advance and that the encrypted superdistribution header 9 is decrypted when a retail recording medium is loaded into the dedicated device. In more detail, the dedicated device is connected to a communication network and charges the consumer a proper fee via the communication network when the superdistribution header 9 is decrypted and the dedicated device reproduces the superdistribution content 10 or records it onto another recording medium. This ensures that the consumer pays the copyright holder for using the superdistribution content 10.

Note that when different superdistribution contents need to be recorded onto a single retail recording medium, a superdistribution header of each superdistribution content is encrypted with a different public key, while the dedicated device decrypts these superdistribution headers with a common decryption key. Note that although a fee for playback and/or purchase of a superdistribution content is charged via a communication network in the present embodiment, such a fee may be charged by another device by transferring fee information onto another recording medium such as an IC card or a prepaid card and having the another device operate according to the IC card or the prepaid card.

For the above construction, the decryption key for decrypting a superdistribution header is provided not on a retail recording medium but in the dedicated device. As a result, if a person who purchased the retail recording medium should try to decrypt the superdistribution header 9 using an unauthorized device, it would be extremely difficult to decrypt the encrypted superdistribution header 9. This is so because a decryption key for decrypting the superdistribution content 10 is contained in the superdistribution header 9. Such decryption key will be described more later. As a result, the decryption of the superdistribution content 10 becomes also very difficult, so that the superdistribution content 10 can be distributed securely.

Note that no indication of the superdistribution content 10 is given on the jacket of the retail recording medium, as shown in FIG. 3. This is to prevent the consumer from thinking that the superdistribution content 10 is provided at no charge when he purchases the retail recording medium storing the retail content 3.

The following explains elements stored in the superdistribution header 9 with reference to FIG. 4. As shown in FIG. 4, the superdistribution header 9 contains a content ID 11, purchase conditions 12, and a decryption key 13.

The content ID 11 is identification information to distinguish the superdistribution content 10 from other contents. As the superdistribution content 10 is a music content, identification information such as an International Standard Recording Code (ISRC) is written as the content ID 11. The ISRC is ID information provided to each song and consists of a country code (two ASCII characters), a recording year (one two-digit number), and a serial number (one five-digit number).

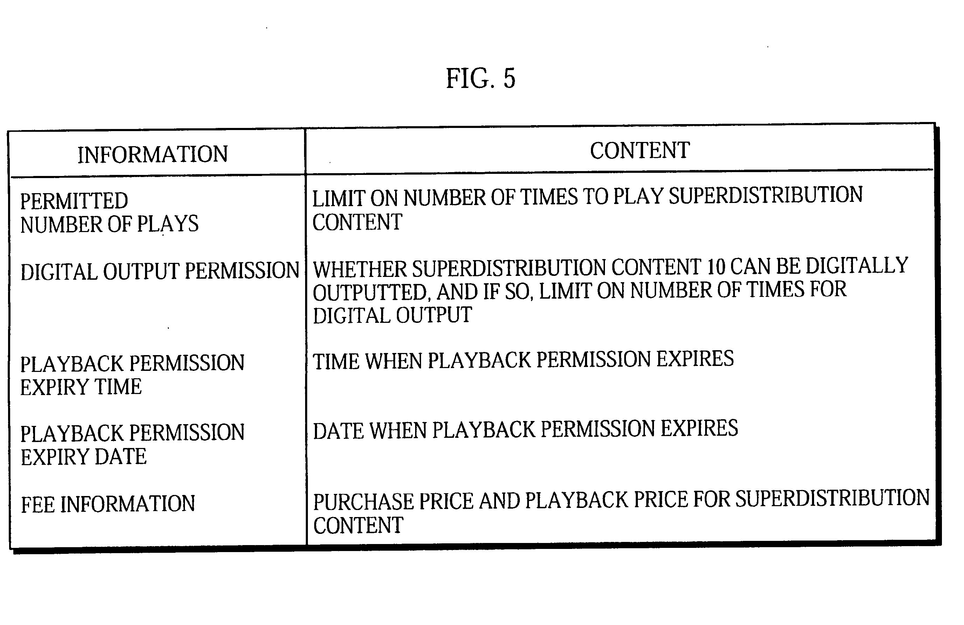

The purchase conditions 12 are information about the conditions regarding the purchase of the superdistribution content 10. FIG. 5 shows an example of the purchase conditions 12. As shown in the right column of FIG. 5, the purchase conditions 12 indicate the following: "permitted number of plays"; "digital output permission"; "playback permission expiry time"; "playback permission expiry date"; and "fee information".

The "permitted number of plays" is an integer indicating a limit on the number of times the superdistribution content 10 can be reproduced.

The "digital output permission" indicates whether the superdistribution content 10 is permitted to be output via a digital output terminal of the dedicated device if the dedicated device has such a terminal. If so, the "digital output permission" also indicates the limit on the number of times for the digital output using an integer.

The "playback permission expiry time" indicates an expiry time at which point the superdistribution content 10 cannot be reproduced any more.

The "playback permission expiry date" indicates a date on which the playback permission expires. After this expiry date, the superdistribution content 10 cannot be reproduced any more.

The "fee information" indicates a fee charged when a consumer reproduces the superdistribution content 10 and a fee for the purchase of the superdistribution content 10. Note that the purchase fee is charged when the consumer records the superdistribution content 10 in the container 6 onto another recording medium, and playback fee is charged on an as-used basis according to a number of times the consumer has reproduced the superdistribution content 10. In electronic commerce, this fee information is an application form with a signature for purchase, which is to say, a consumer who owns the retail recording medium applies for the purchase or playback of the superdistribution content 10 by having the dedicated device transmit the fee information along with a user (consumer) ID to a host computer at a billing office of the music company. The dedicated device loaded with the retail recording medium performs the above transmission via the communication network. The billing office, which knows a credit card number of the user registered in advance, charges the consumer for the purchase or the playback by withdrawing the fee from a bank account corresponding to the credit card number of the user referring to the sent user ID.

The decryption key 13 decrypts the encrypted content 8 to generate the superdistribution content 10. The superdistribution content 10 is a music content in a format such as Linear Pulse Code Modulation (LPCM), Advance Audio Coding (AAC), or Digital Theater System (DTS) and is encrypted with a block cryptosystem. Block cryptosystems divide a content to be encrypted into blocks of a certain length, and encrypts the content in units of blocks. DES (data encryption standard), where one block is 64-bit long, or RC5, where blocks have a variable length, are examples of block cryptosystems. In a block cryptosystem, the same key is used for encryption and decryption, so that block cryptosystems have lower security than public key cryptosystems. However, with the present embodiment, the decryption key 13 used for decrypting the encrypted content 8 is contained in the superdistribution header 9 that is itself encrypted with a public key cryptosystem of higher security. As a result, it is extremely difficult for an unauthorized user to decrypt the superdistribution content 10.

As has been described, with the above construction of the container 6, it is extremely difficult to decrypt the superdistribution header 9 and tamper with the fee information, as the purchase conditions 12 are contained in the superdistribution header 9 which has been encrypted using a public key to ensure high security. As stated above, the superdistribution header 9 is encrypted with complex public key encryption, and the superdistribution content 10 is encrypted via a simpler block encryption technique using the decryption key 13 given in the superdistribution header 9. When the consumer decides to play or purchase the superdistribution content 10, the superdistribution content 10 can be quickly decrypted using the decryption key 13 taken from the superdistribution header 9 and presented to the user. The time taken by this decryption should be far shorter than the time that taken to download the same content electronically. In this way, the present technique succeeds in allowing the consumer to quickly reproduce or purchase the superdistribution content 10.

The following describes management information on a superdistribution header and a superdistribution content. Although a retail content is managed by management information provided on a CD or a DVD-Audio disc storing the retail content so that such content will be recognized and reproduced as music by a CD player or a DVD-Audio disc player, a superdistribution content and a superdistribution header are not managed by such management information. This is to stop the CD player or the DVD-Audio disc player recognizing the superdistribution content as music and reproducing the superdistribution content without decrypting it. In such case, the superdistribution content would be reproduced as noise. Accordingly, a superdistribution content and a superdistribution header are managed by unique management information to distinguish them from the retail content. This management information is used by the dedicated device to detect the start and the end of the recording areas of the superdistribution header and the superdistribution content on a recording medium when reading the superdistribution header and the superdistribution content from the recording medium. Here, note that the terms CD player and DVD-Audio disc player do not refer to the digital data playback device 400 that is described later.

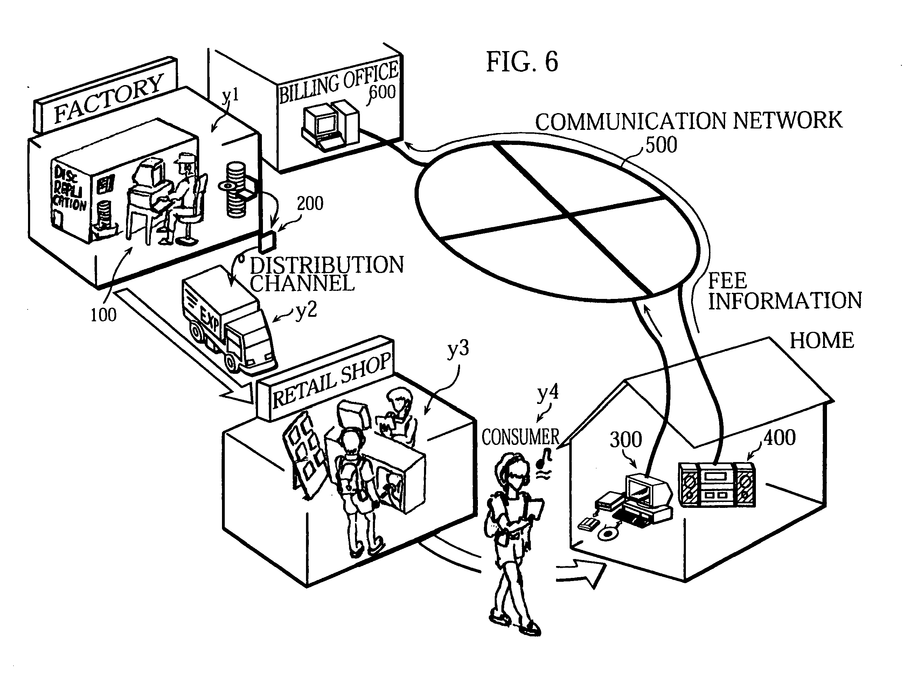

The following explains how the retail content 3 is distributed to a consumer and the superdistribution content 10 is superdistributed to the consumer with reference to FIG. 6.

As shown by arrow y1 in FIG. 6, a digital data recording device 100 installed in a factory operated by the music company records the retail content 3, the playback control script 4, the still image data 5, and the container 6 onto a retail recording medium 200. The retail recording medium 200 is then transported as shown by arrow y2 by truck, for instance, to a retail shop as in the distribution of a conventional CD so that a consumer can purchase the retail recording medium 200 at the retail shop as shown by arrow y3.

The consumer who bought the retail recording medium 200 plays the retail content 3 in the same manner as when playing a normal CD or on a DVD-Audio disc. For instance, the consumer may listen to the retail content 3 on a portable playback device while walking as shown by arrow y4.

Assume that the consumer who bought the retail recording medium 200 has a digital data recording device 300 and a digital data playback device 400 in his house as the aforementioned dedicated devices connected to a communication network. The digital data recording device 300 records the superdistribution content 10 from the retail recording medium 200 onto another recording medium with a fee being charged by the music company. The digital data playback device 400 plays the superdistribution content 10 on the retail recording medium 200, which is also charged.

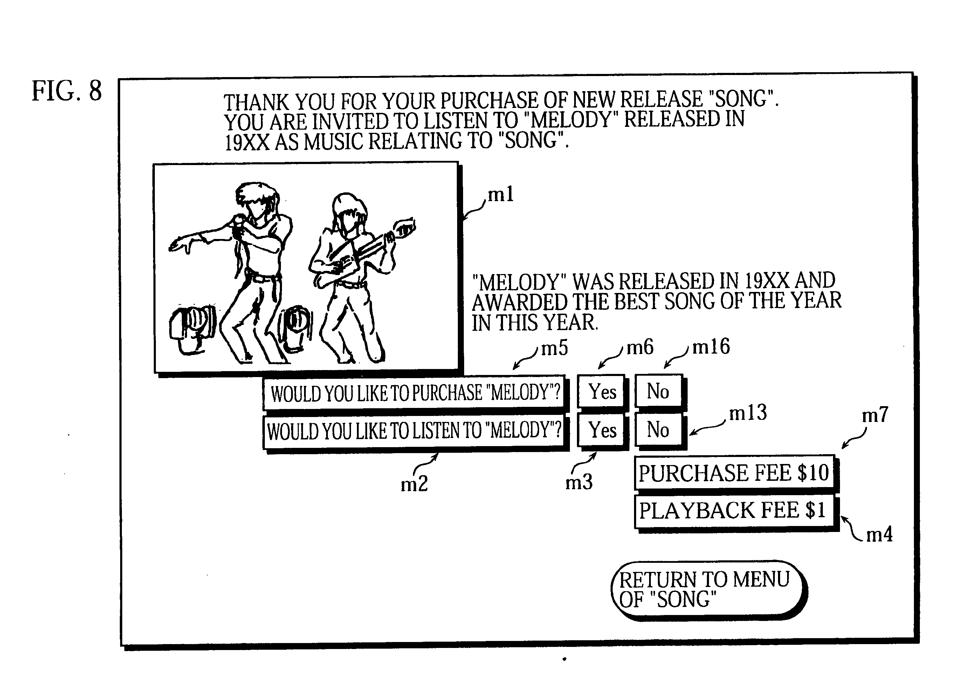

The playback control script 4 in the retail recording medium 200 has the digital data recording device 300 and the digital data playback device 400 display an interactive screen that contains the reproduced still image data 5. FIG. 8 shows an example of the interactive screen. In FIG. 8, an image m1 is an introductory image of the superdistribution content 10, for instance, a photo of the band who plays a related release of the superdistribution content 10. A message m2 prompts the user to reproduce the superdistribution content 10, and buttons m3 and m13 are used to designate positive and negative responses to the message m2. A playback fee m4 shows the reproduction fee of the superdistribution content 10. A message m5 prompts the user to purchase the superdistribution content 10, and buttons m6 and m16 are used to designate positive and negative responses to the message m5. A purchase fee m7 shows a purchase price of the superdistribution content 10. This interactive screen allows a consumer to know about the superdistribution content 10 in the retail recording medium 200, and if interested, the consumer can have the digital data playback device 400 reproduce the superdistribution content 10 or purchase the superdistribution content 10 via the digital data recording device 300. When the consumer purchases or reproduces the superdistribution content 10, the digital data recording device 300 or the digital data playback device 400 transmits fee information indicating a fee for the purchase or the playback via a communication network 500 to a host computer 600 installed in the billing office of the music company.

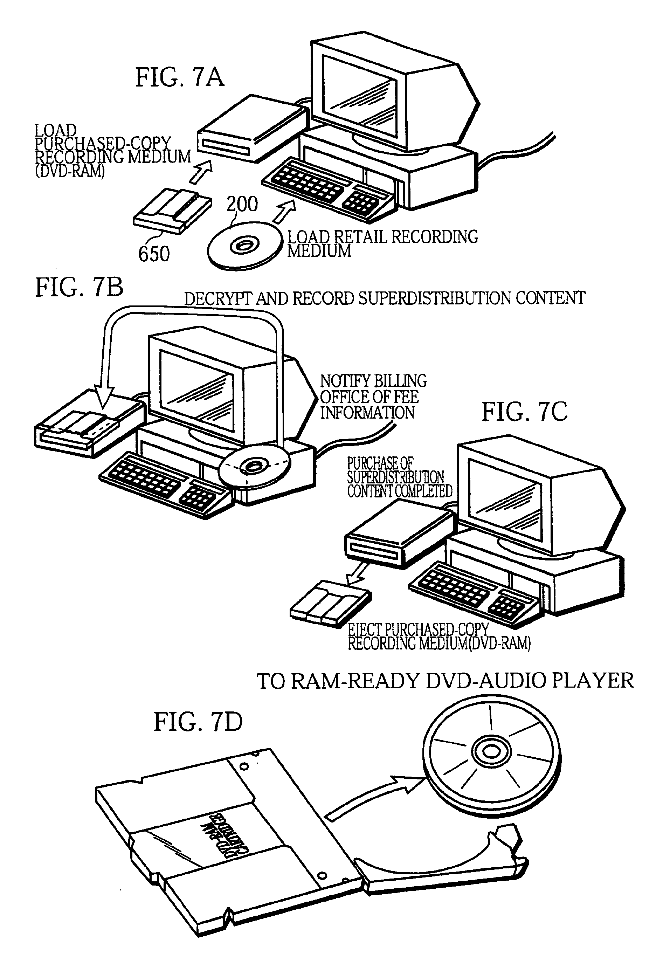

FIGs.7A-7D show stages in which the digital recording device 300 records the superdistribution content 10 from the retail recording medium 200 onto another recording medium to purchase the superdistribution content 10. Hereafter, the recording medium onto which the superdistribution content 10 is recorded to purchase it from a retail recording medium is called the purchased-copy recording medium. Here, assume that the purchased-copy recording medium is a DVD-RAM.

As shown in FIG. 7A, when a user loads the retail recording medium 200 and the DVD-RAM 650 as a purchased-copy recording medium into the digital data recording device 300, the digital recording device 300 records the superdistribution content 10 onto the DVD-RAM 650 as shown in FIG. 7B. When the user ejects the DVD-RAM 650 as shown in FIG. 7C, the purchase of the superdistribution content 10 is completed. To play the DVD-RAM 650, the user removes the DVD-RAM 650 from its cartridge and loads the DVD-RAM 650 into a DVD-RAM-compatible DVD-Audio player that can play both DVD-Audio discs and DVD-RAMs.

Note that the digital recording device 300 may record the superdistribution content 10 onto a memory card, instead of a DVD-RAM.

With the superdistribution explained in the present embodiment, a price of the superdistribution content 10 can be set lower than the retail price of the retail content 3. This is because the retail price of the retail content 3 includes various distribution costs of an Enhanced-CD or a DVD-Audio disc such as a transportation cost, while the price of the superdistribution content 10 does not include any distribution cost as it can be purchased by merely decrypting the encryption.

The present embodiment enables the user to purchase related contents in an interactive manner that resembles electronic commerce without using high speed communication lines that would be required for successful electronic distribution via the Internet, for example.

Note that while an Enhanced-CD and a DVD-Audio disc are used as a recording medium to store a music content in the present embodiment, a DVD-Audio disc of a hybrid type functions both as a DVD-Audio disc and as a DVD-ROM.

This completes the description of a data structure suitable for the superdistribution, which is the first embodiment of the present invention.

### Second Embodiment

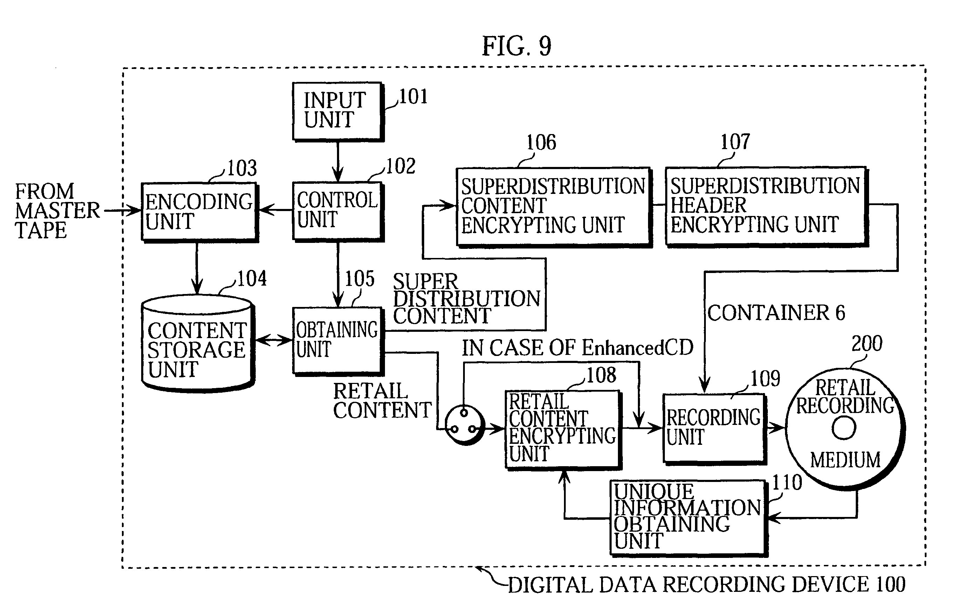

The second embodiment relates to a digital data recording device 100 that produces a recording medium containing data in a format suited to superdistribution. FIG. 9 shows the digital data recording device 100 of the present embodiment. The digital data recording device 100 is achieved by installing a dedicated application program into a general-purpose personal computer, and comprises an input unit 101, a control unit 102, an encoding unit 103, a content storage unit 104, an obtaining unit 105, a superdistribution content encrypting unit 106, a superdistribution header encrypting unit 107, a retail content encrypting unit 108, a recording unit 109, and a unique information obtaining unit 110. The digital data recording device 100 records a superdistribution content onto the retail recording medium 200.

Note that although the digital data recording device 100 of the present embodiment records a music content onto a retail recording medium, data to be recorded onto a retail recording medium is not limited to this, that is, other data such as graphic data, character data, or combination of graphic data and character data may be recorded onto the retail recording medium.

The input unit 101 is connected to a pointing device such as a mouse or a keyboard and receives an instruction from an operator to encode a certain piece of music, to obtain a certain encoded data, etc.

The control unit 102 interprets a request from the input unit 101 and instructs the encoding unit 103 to encode a piece of music or the obtaining unit 105 to obtain a music content stored in the content storage unit 104.

The encoding unit 103 encodes original music recorded on a master tape or the like and compresses the encoded music to generate a music content. For instance, the encoding unit 103 generates digital data in LPCM format, and compresses the generated LPCM digital data to generate a music content in AAC format. After generating the music content, the encoding unit 103 generates the content ID, which has been described in the first embodiment, of the generated music content. Note that the digital data recording device 100 does not have to include the encoding unit 103 because such encoding may be performed beforehand, for instance, by a different device, and the music content that has been encoded can be stored in the content storage unit 104.

The content storage unit 104 is a large-capacity hard disk device, which stores the music content encoded by the encoding unit 103 and its content ID.

The obtaining unit 105 obtains a music content that has been encoded and its content ID from the content storage unit 104 according to an instruction from the control unit 102.

The superdistribution content encrypting unit 106 encrypts a superdistribution content. Here, assume that the digital data recording device 100 is to produce the retail recording medium 200 that has the same stored contents as shown in FIG. 1 or FIG. 2. In this case, the superdistribution content encrypting unit 106 encrypts the superdistribution content 10 using the decryption key 13 as an encryption key to generate the encrypted content 8. The setting of the decryption key 13 can be made arbitrarily by the operator.

The superdistribution header encrypting unit 107 generates the superdistribution header 9 by combining the purchase conditions 12 that the operator has written in a format suited to superdistribution, the content ID 11, and the decryption key 13. The superdistribution header encrypting unit 107 then encrypts the generated superdistribution header 9 to generate the encrypted header 7, which it attaches to the encrypted content 8 to produce the container 6.

The unique information obtaining unit 110 obtains, if the retail recording medium 200 is a DVD-Audio disc and the retail content 3 needs to be encrypted based on identification information unique to the DVD-Audio disc, identification information that was recorded onto the DVD-Audio disc when the DVD-Audio disc was manufactured. The unique information obtaining unit 110 then outputs the obtained identification information to the retail content encrypting unit 108. If the retail recording medium 200 is an Enhanced-CD, the retail content 3 does not need to be encrypted, and the processing of the unique information obtaining unit 115 is not performed.

The retail content encrypting unit 108 encrypts the retail content 3 based on the obtained identification information unique to the DVD-Audio disc if the retail recording medium 200 is a DVD-Audio disc. If the retail recording medium 200 is an Enhanced-CD, the retail content 3 does not need to be encrypted so that the retail content encrypting unit 108 does not encrypt the retail content 3. A cryptosystem based on identification information unique to a recording medium is disclosed by Japanese Laid-Open Patent Application No.5-257816, and so that no detailed explanation of such will be given.

The recording unit 109 records the container 6 generated by the superdistribution header encrypting unit 107 and the retail content 3 that may be encrypted by the retail content encrypting unit 108 onto the retail recording medium 200.

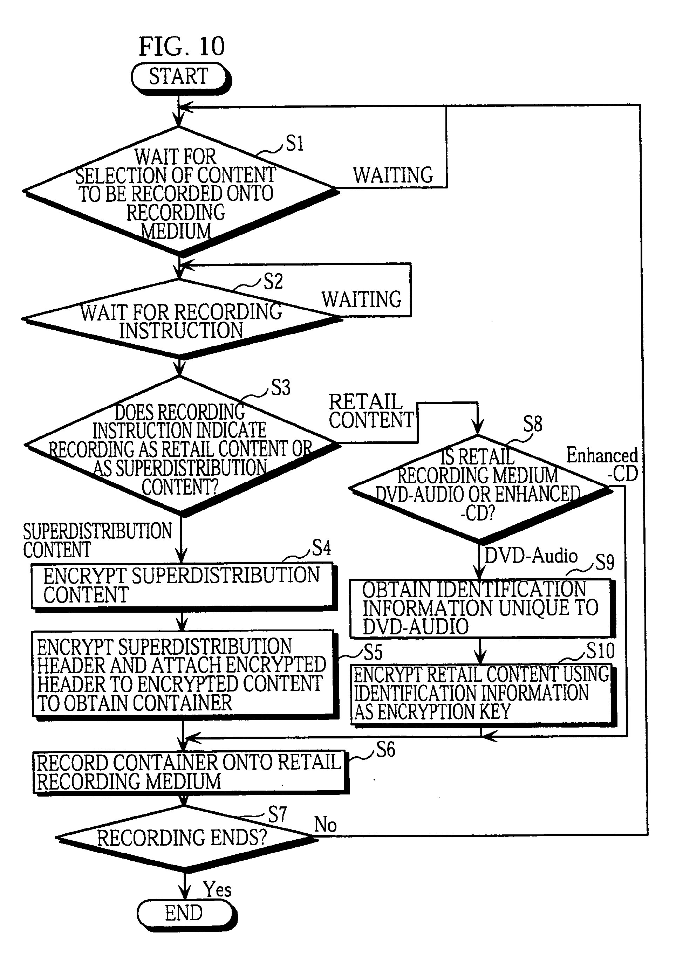

The following explains the processing of the digital data recording device 100 with reference to the flowchart of FIG. 10. The following explanation is provided assuming that original music has been already encoded and compressed as music contents and that a plurality of such music contents are stored in the content storage unit 104.

In step S1, after being activated, the control unit 102 waits for a designation of a music content to be recorded onto the retail recording medium 200 out of the plurality of music contents in the content storage unit 104. If a music content has been designated, the control unit 102 waits for an instruction from the operator to record the designated music content onto the retail recording medium 200 either as a retail content or a superdistribution content in step S2. On receiving the instruction, the control unit 102 judges whether the received instruction indicates that the designated music content should be recorded as a retail content or a superdistribution content in step S3.

Here, assume that the control unit 102 judges that the instruction indicates that the music content should be recorded as a retail content (the retail content 3) in step S3. As a result, the processing moves from step S3 to step S8, where the control unit 102 judges whether the retail recording medium 200 is a DVD-Audio disc or an Enhanced-CD. If the control unit 102 judges that the retail recording medium 200 is an Enhanced-CD, the processing moves from step S8 to step S6, where the control unit 102 instructs the obtaining unit 105 to obtain the designated music content from the content storage unit 104 and the recording unit 109 to record it onto the retail recording medium 200. On the other hand, if the control unit 102 judges that the retail recording medium 200 is a DVD-Audio disc in step S8, the processing moves to step S9, where the control unit 102 instructs the obtaining unit 105 to obtain the designated music content from the content storage unit 104 and send it to the retail content encrypting unit 108. The retail content encrypting unit 108 then instructs the unique information obtaining unit 108 to obtain the unique identification information from the retail recording medium 200. The processing then moves from step S9 to step S10, where the retail content encrypting unit 108 encrypts the retail content 3 using the obtained identification information as an encryption key, and then to step S6, where the recording unit 109 records the encrypted retail content 3 onto the retail recording medium 200. The above processing in steps S1 to S3, S8 to S10, and S6 results in the retail content 3 being recorded onto the retail recording medium 200. The following explains the processing performed when the control unit 102 judges that the received instruction indicates that the designated music content should be recorded as a superdistribution content (the superdistribution content 10) in step S3.

On judging that the designated music content should be recorded as a superdistribution content, the control unit 102 instructs the obtaining unit 105 to obtain the music content and output the obtained music content (superdistribution content 10) to the superdistribution content encrypting unit 106 in step S3. In step S4, the superdistribution content encrypting unit 106 encrypts the output superdistribution content 10 to generated the encrypted content 8.

In step S5, the control unit 102 instructs the superdistribution header encrypting unit 107 to combine the content ID 11, the purchase conditions 12, and the decryption key 13 and to encrypt the combination to generate encrypted header 7. The control unit 102 then attaches the encrypted header 7 to the encrypted content 8 to generate the container 6. In step S6, the recording unit 109 records the container 6 onto the retail recording medium 200. In step S7, the digital data recording device 100 asks the operator if recording should be terminated. If so, the processing shown in this flowchart is terminated, or if not, the processing moves from step S7 to step S1.

As has been described, the digital data recording device 100 of the present embodiment selects, out of a plurality of music contents to be recorded onto the retail recording medium 200, a music content whose reproduction and recording onto another recording medium should be charged as a superdistribution content. The digital data recording device 100 then encrypts the superdistribution content to prevent the superdistribution content from being reproduced or recorded onto another recording medium without a fee being charged.

Since the superdistribution header 9 containing the decryption key 13 and the fee information 12 used by the dedicated device when the superdistribution content 10 is reproduced or/and purchased is attached to the encrypted superdistribution content 10, the music company can be paid each time the consumer plays the superdistribution content 10 or when the consumer purchases the superdistribution content 10.

### Third Embodiment

The following explains the third embodiment.

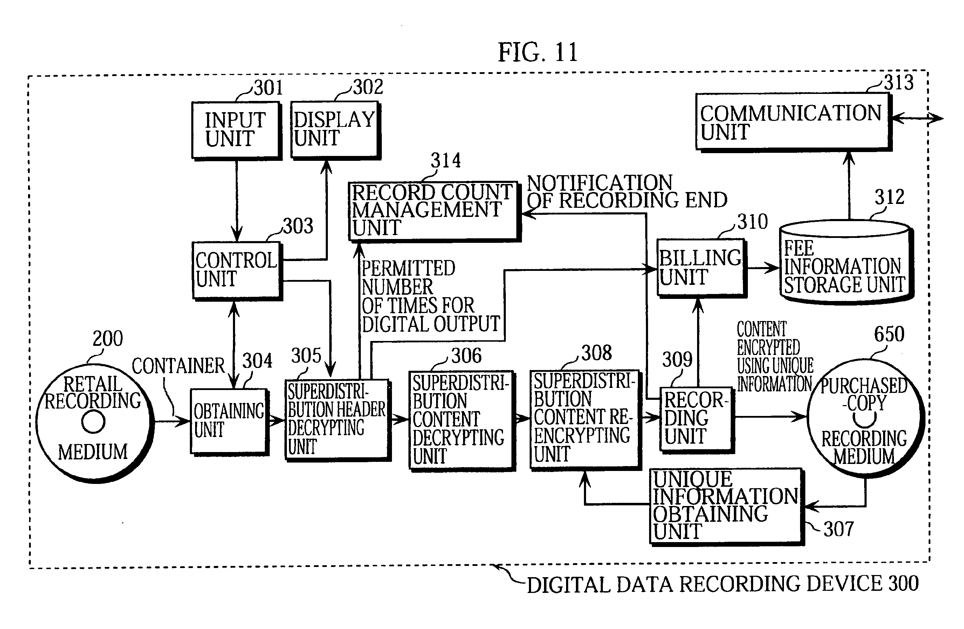

FIG. 11 shows an internal construction of a digital data recording device 300 of the third embodiment. The digital data recording device 300 is fundamentally the same as a digital data recording device used for the conventional electronic music distribution, and so has a download function for electronic music distribution to receive a music content via the Internet and to record the music content onto a purchased-copy recording medium with a fee being charged. More specifically, the digital data recording device 300 includes a communication unit 313 for transferring data via the Internet and a billing unit 310 for charging a fee via the communication network when using electronic commerce. FIG. 11 is provided to functionally show the internal structure of the digital data recording device 300 related to the purchase of superdistribution contents.

The digital data recording device 300 is achieved by a personal computer in which a dedicated application program has been installed and comprises an input unit 301, a display unit 302, a control unit 303, an obtaining unit 304, a superdistribution header decrypting unit 305, a superdistribution content decrypting unit 306, a unique information obtaining unit 307, a superdistribution content re-encrypting unit 308, a recording unit 309, the billing unit 310, a fee information storage unit 312, the communication unit 313, and a record count management unit 314. The following explanation assumes that the retail recording medium 200 has the stored contents shown in FIG. 1 or FIG. 2 and that the purchased-copy recording medium 650 is a DVD-RAM.

The input unit 301 is connected to a pointing device such as a mouse or a keyboard, and receives an instruction to purchase a certain superdistribution content from the user. Note that the "purchase" of a superdistribution content via the superdistribution can be achieved by recording data in the superdistribution content onto another recording medium or by outputting the data in the superdistribution content via a digital output terminal provided on a digital data recording or playback device. This latter case is possible since it enables the data in the superdistribution content 10 to be recorded onto another recording medium loaded in another drive device. Here, note that the digital data recording device 300 is assumed to have such a digital output terminal to which a drive device is connected as shown in FIG. 7A.

The display unit 302 displays an interactive screen based on the playback control script 4 and the still image data 5 which are recorded on the retail recording medium 200 to visually provide the consumer with information on the superdistribution content 10 such as fees for playback and purchase of the superdistribution content 10.

The control unit 303 interprets an instruction inputted via the input unit 301 from the user and instructs other functional units according to the instruction. For instance, on receiving the instruction from the user to purchase the superdistribution content 10, the control unit 303 instructs the obtaining unit 304 to obtain the superdistribution content 10 and the superdistribution header 9 from the retail recording medium 200. The control unit 313 also controls the processing thereafter according to an output from another functional unit.

The obtaining unit 304 obtains the container 6 from the retail recording medium 200.

The superdistribution header decrypting unit 305 decrypts the encrypted header 7 in the container 6 obtained by the obtaining unit 304 using a decryption key to obtain the superdistribution header 9. When the superdistribution header 9 is obtained, it becomes possible to show the user the purchase conditions 12. Here, the decryption key used to decrypt the encrypted header 7 may be contained beforehand in the application program installed in the digital data recording device 300 or may be transmitted from the billing office via a communication network.

After the superdistribution header decrypting unit 305 decrypts the superdistribution header 9, the superdistribution content decrypting unit 306 decrypts the encrypted content 8 using the decryption key 13 contained in the superdistribution header 9. As a result, the superdistribution content 10 is obtained.

The unique information obtaining unit 307 obtains identification information unique to the purchased-copy recording medium 650, which is a DVD-RAM. For a DVD-RAM, information written in a Burst Cutting Area (BCA) is used as the identification information on the DVD-RAM. Different identification information is recorded onto each DVD-RAM when the DVD-RAM is manufactured, and the identification information cannot be changed. When the superdistribution content 10 is encrypted using the identification information unique to a DVD-RAM as an encryption key, the decryption key for decrypting the superdistribution content 10 will also be based on the same identification information, and so if the encrypted superdistribution content should be copied from one DVD-RAM onto another, identification information will differ, preventing the copied superdistribution content from being decrypted. As a result, the copyright of the superdistribution content 10 can be securely protected.

Based on the identification information obtained by a unique information obtaining unit 307, the superdistribution content re-encrypting unlit 308 encrypts the superdistribution content 10 that has been decrypted by the superdistribution content decrypting unit 308.

The recording unit 309 records the re-encrypted superdistribution content 10 onto the purchased-copy recording medium 650 and outputs a recording end notification to the billing unit 310.

On receiving the recording end notification from the recording unit 309, the billing unit 310 reads the fee information from the purchase conditions 12 in the decrypted superdistribution header 9, and calculates a fee for the purchase based on the read fee information. The billing unit 310 then inserts the calculated purchase fee into the read fee information.

The fee information storage unit 312 is achieved by a hard disk in the personal computer, and stores the fee information containing the calculated fee. It is desirable that the fee information storage unit 312 stores the fee information is an encrypted state or stores the fee information in a "secure area" which cannot be accessed by a user through a standard processing to protect the fee information from being tampered with.

The communication unit 313 includes a modem device connected to the communication network and software to control the modem device, and transmits the ID of the user and the fee information in the fee information storage unit 312 to the host computer 600 installed in the billing office of the music company via the communication network with an appropriate timing. Here, the appropriate timing may be when the fee reaches a predetermined amount, or when a predetermined day comes. It is of course possible to communicate with the host computer 600 each time the user records a superdistribution content onto the purchased-copy recording medium 650.

The record count management unit 314 stores a number of times the recording unit 309 has recorded the superdistribution content 10 onto a purchased-copy recording medium 650 so far, and increments the number by one each time the recording unit 309 records the superdistribution content 10 onto a purchased-copy recording medium 650.

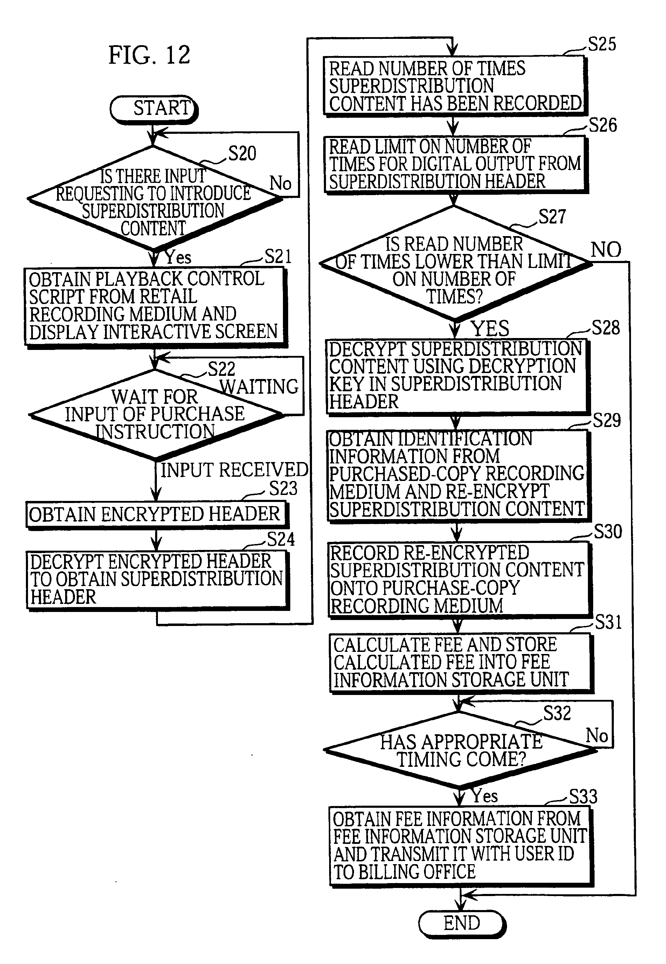

The following explains the processing of the digital data recording device 300 that has the above construction with reference to the flowchart of FIG 12.

The processing of this flowchart starts when the retail recording medium 200 is loaded into the digital data recording device 300. In step S20, an input from the user requesting to introduce the superdistribution content 10 of the related music is awaited. On receiving such input, in step S21 the control unit 303 has the obtaining unit 304 read the playback control script 4 and the still image data 5 from the added value area 2 of the retail recording medium 200. The control unit 303 then has the display unit 302 display the interactive screen shown in FIG. 8. In step S22, an instruction from the user to purchase the superdistribution content 10 is awaited. If an input indicating that the user performs cancel operation is received, the processing is terminated, or if the purchase instruction is received, the processing moves from step S22 to step S23, where the control unit 303 has the obtaining unit 304 obtains the container 6 containing the encrypted header 9 from the retail recording medium 200. In step S24, the superdistribution header decrypting unit 305 decrypts the encrypted header 7 to obtain the superdistribution header 9. In step S25, the control unit 303 reads the number of times the recording unit 309 has recorded the superdistribution content 10 so far from the record count management unit 314. In step S26, the control unit 303 reads the limit on the number of times for digital output from the superdistribution header 9. In step S27, the control unit 303 judges whether the number of times read from the record count management unit 314 is lower than the read limit on the number of times. If not, the recording of the superdistribution content 10 is no longer permitted, and the processing of this flowchart is terminated. If so, the control unit 303 has the superdistribution content decrypting unit 306 decrypt the decrypted content 8 using the decryption key 13 in the superdistribution header 9 in step S28 to obtain the superdistribution content 10.

After the decryption of the superdistribution content 10, the control unit 303 has the unique information obtaining unit 307 obtain the identification information from the purchased-copy recording medium 650, and has the superdistribution content re-encrypting unit 308 encrypt the superdistribution content 10 using the obtained identification information as an encryption key in step S29. In step S30, the control unit 303 has the recording unit 309 record the re-encrypted superdistribution content 10 onto the purchased-copy recording medium 650.

At the completion of the recording by the recording unit 309, the control unit 303 has the billing unit 310 read the fee information in the purchase conditions 12 from the superdistribution header 9 and calculate the fee for the purchase based on the read fee information. The control unit 303 then has the billing unit 310 insert the calculated purchase fee into the read fee information and place the inserted fee information into the fee information storage unit 312 in step S31. In step S32, the control unit 303 waits for an appropriate time to transmit the fee information stored in the fee information storage unit 312, and when such time is reached, the control unit 303 has the communication unit 313 obtain and transmit the fee information along with the ID of the user to the host computer 600 of the billing office in step S33. This completes the processing.

As has been described, only when the consumer agrees to the purchase of the superdistribution content 10 in the retail recording medium 200 the consumer has bought, does the digital data recording device 300 record the superdistribution content 10 onto the purchased-copy recording medium 650 and transmit the fee information for the recording to the billing office via the communication network. As a consumer does not need to download the superdistribution content 10 via the communication network, the communications fee charged to the consumer can be minimized in a state where the required infrastructure for electronic music distribution has not been fully implemented, and so a transmission speed of a communication network is low. As a result, the superdistribution content 10 can be sold with little cost involved.

### Fourth Embodiment

The fourth embodiment relates to a digital data playback device 400 for reproducing a superdistribution content having been charged a fee. Unlike the digital data recording device 300 of the third embodiment that records the superdistribution content 10 from the retail recording medium onto another recording medium, the present digital data playback device 400 directly reproduces a superdistribution content from the retail recording medium 200, which is the major difference between the above two devices. Both devices have a function to download a music content via the Internet with the electronic music distribution and so include common functional units for performing such download.

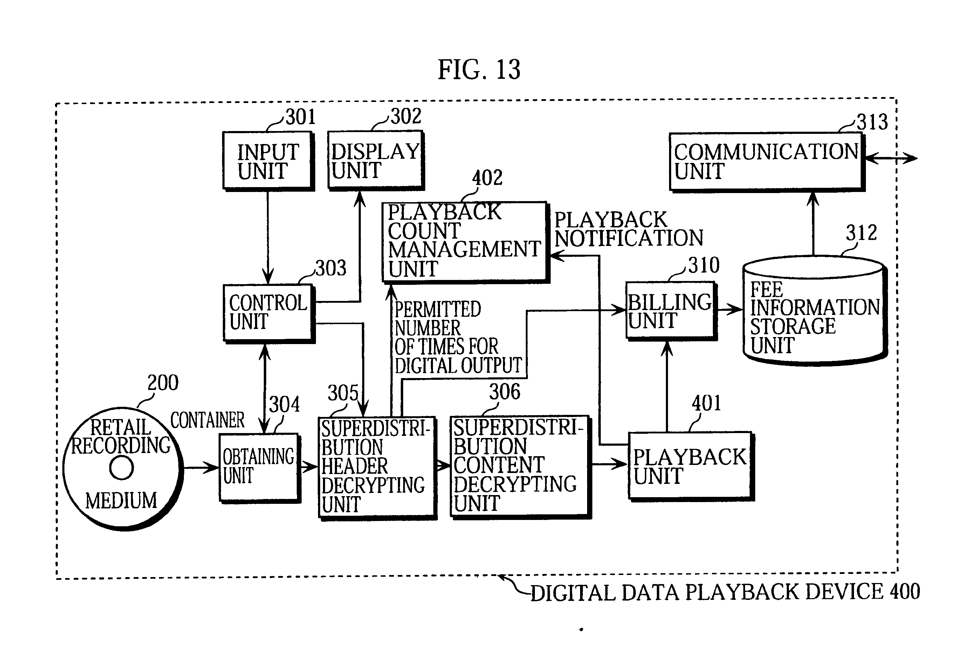

FIG. 13 shows the construction of the digital data playback device 400 of the present embodiment. In FIG. 13, the functional units common to the digital data recording device 300 and the digital data playback device 400 are given the same reference numbers as in FIG. 11, and will not be explained here. The following explains only the functional units assigned reference numbers in the 400 that are unique to the digital data playback device 400. These are a playback unit 401 and a playback count management unit 402.

The playback unit 401 reproduces the superdistribution content 10 that has been decrypted by the superdistribution content decrypting unit 306. On starting to reproduce the superdistribution content 10, the playback unit 401 notifies the billing unit 310 of the start of the reproduction so that the billing unit 310 charges the user the reproduction fee.

The playback count management unit 402 records a number of times the playback unit 401 has reproduced the superdistribution content 10, and increments the number by one for each reproduction by the playback unit 401.

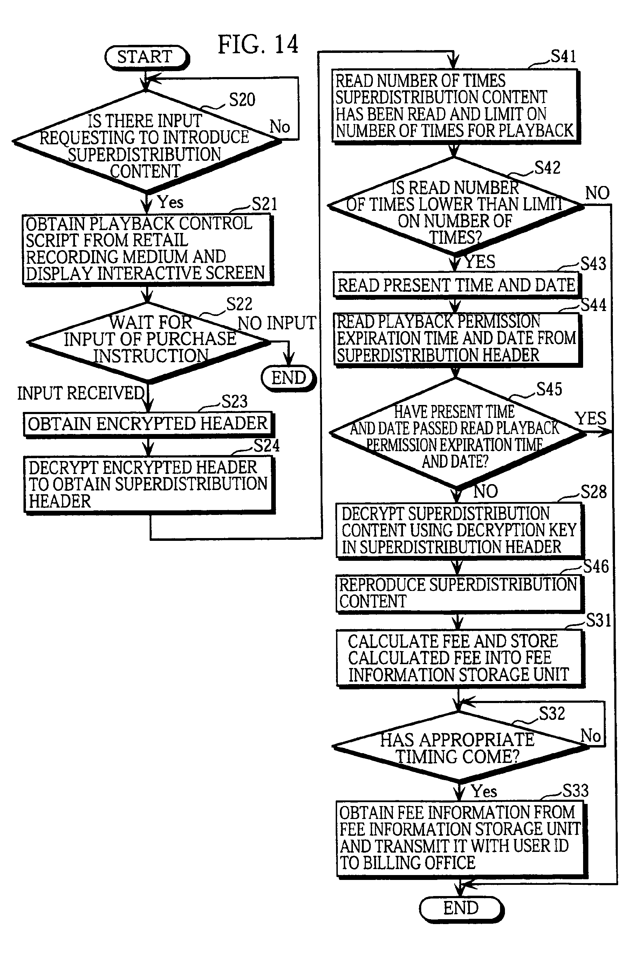

The following specifically explains the processing of the digital data playback device 400 with reference to the flowchart of FIG. 14. In this flowchart, steps S20 to S24, step S28, and steps S31 to S33 are the same as in FIG. 12 and so will not be explained. The following explanation focuses on steps S41 to S46 that are unique to the fourth embodiment.

Following step S24 in which the encrypted header 7 is decrypted to obtain the superdistribution header 9, the control unit 303 reads the number of times the playback unit 401 has reproduced the superdistribution content 10 from the playback count management unit 402 in step S41. In the same step, the control unit 303 reads the permitted number of plays from the superdistribution header 9. In step S42, the control unit 303 judges whether the number of times read from the playback count management unit 402 is lower than the permitted number of plays. If not, which means that the reproduction is no longer permitted, the processing of this flowchart is terminated, or if so, the control unit 303 reads the present time and date in step S43 and the playback permission expiry time and date from the superdistribution header 9 in step S44. In step S45, the control unit 303 judges whether the read present time has passed the read playback permission expiry time and the playback permission expiry date. If so, the processing of this flowchart is terminated, or if not, the processing moves from step S45 to step S28 in which the control unit 303 has the superdistribution content decrypting unit 306 decrypt the decrypted content 8 using the decryption key 13 to generate the superdistribution content 10. In step S46, the control unit 303 has the playback unit 401 reproduce the superdistribution content 10.

With the digital data playback device 400 of the present embodiment, the playback unit 401 notifies to the billing unit 310 whenever it starts to reproduce the superdistribution content 10. This allows the music company to charge the consumer each time the superdistribution content 10 is reproduced.

Note that the stated function to reproduce the superdistribution content 10 may be combined with the function to purchase the superdistribution content 10 described in the third embodiment to realize a digital data recording device in which these two functions are provided.

### Fifth Embodiment

Although the first to the fourth embodiment have been described assuming that a music content is distributed using a recording medium, the present embodiment is described with a premise that a content is distributed using not only a recording medium but also the Internet or a broadcast wave of a satellite broadcast, a CATV cable, or the like.

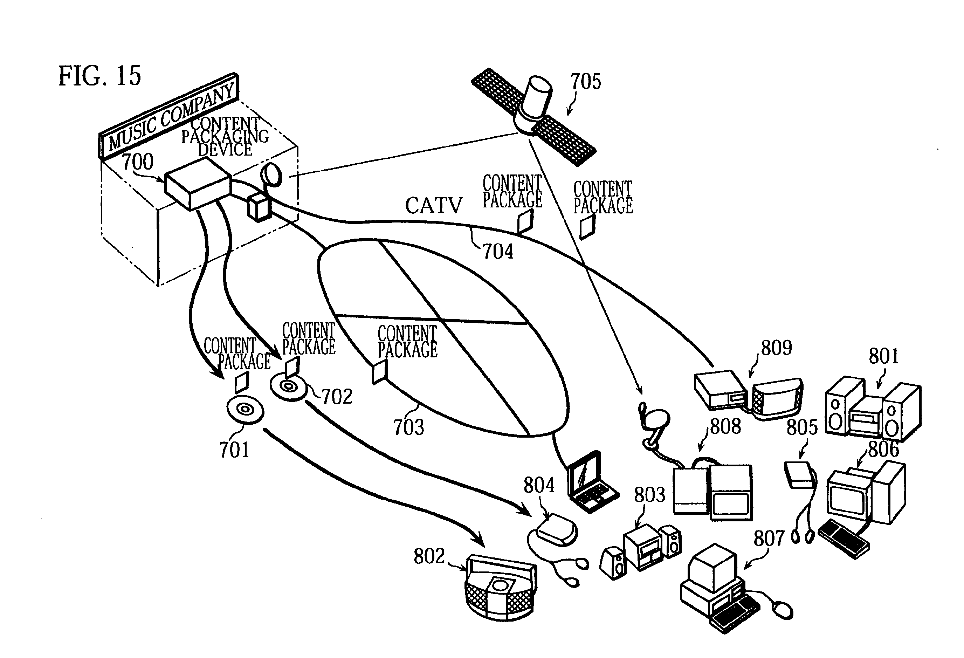

FIG. 15 shows a variety of methods to distribute content packages produced by a content packaging device 700 of the present embodiment. The content package contains a plurality of contents, and will be explained more later. As shown in FIG. 15, content packages are distributed via a DVD-Audio disc 701, a CD 702, the Internet 703, a CATV cable 704, and a communication satellite 705. Content playback devices 801-809 are devices for reproducing a content package. The device 801 is a high-grade device dedicated to reproducing a content, and the devices 802 and 803 are low-grade dedicated device for a content. The devices 804 and 805 are dedicated portable devices for a content, and the devices 806 and 807 are general-purpose personal computers equipped with hardware dedicated to the reproduction of a content. The devices 808 and 809 are set-top boxes for receiving a broadcast wave via a communication satellite or a CATV cable.

In this way, content packages are distributed to the content playback devices of various types. Among the content playback devices 801-809, consumer devices such as the devices 801 and 802 include hardware dedicated to the decryption of an encrypted content, while the devices 806 and 807 that are general-purpose personal computers do not include such dedicated hardware for decryption, and can only decrypt encrypted contents by running decryption software on general-purpose hardware. Accordingly, it is possible to regard the general-purpose personal computers 806 and 807 as not having a copyright protection system, and the consumer devices 801-805 as having such a system. This arrangement is used because consumer playback devices can reproduce contents at high quality, while a general-purpose personal computer can only reproduce contents at low quality.

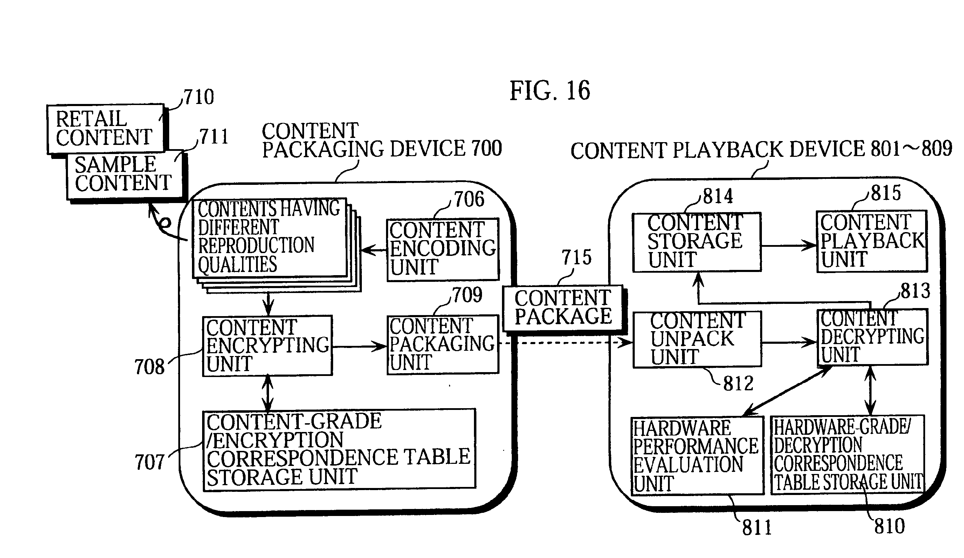

FIG. 16 shows internal constructions of the content packaging device 700 and the content playback devices 801-809 according to the fifth embodiment. The content packaging device 700 includes a content encoding unit 706, a quality-grade/encryption correspondence table storage unit 707, a content encrypting unit 708, and a content packaging unit 709.

The content encoding unit 706 encodes a production to be distributed using different methods to generate a plurality of contents that each have a different reproduction quality but are based on the same production. Here, assume that the generated plurality of contents are a retail content 710 and a sample content 711 that has a reproduction quality lower than the retail content 710.

The content-grade/encryption correspondence table storage unit 707 stores a first correspondence table and a second correspondence table. The first correspondence table stores a plurality of pairs that each consist of a quantization bit number and a sampling frequency which are used by the content encoding unit 706 when encrypting the content, and stores a plurality of content grades assigned to each content that is generated as a result of the above encoding. In this table, each pair is associated with a different content grade. The second correspondence table stores the same content grades as the first correspondence table and a plurality of pairs that each consist of an encryption key bit number and an encryption algorithm name. Each content grade is associated with a different pair.

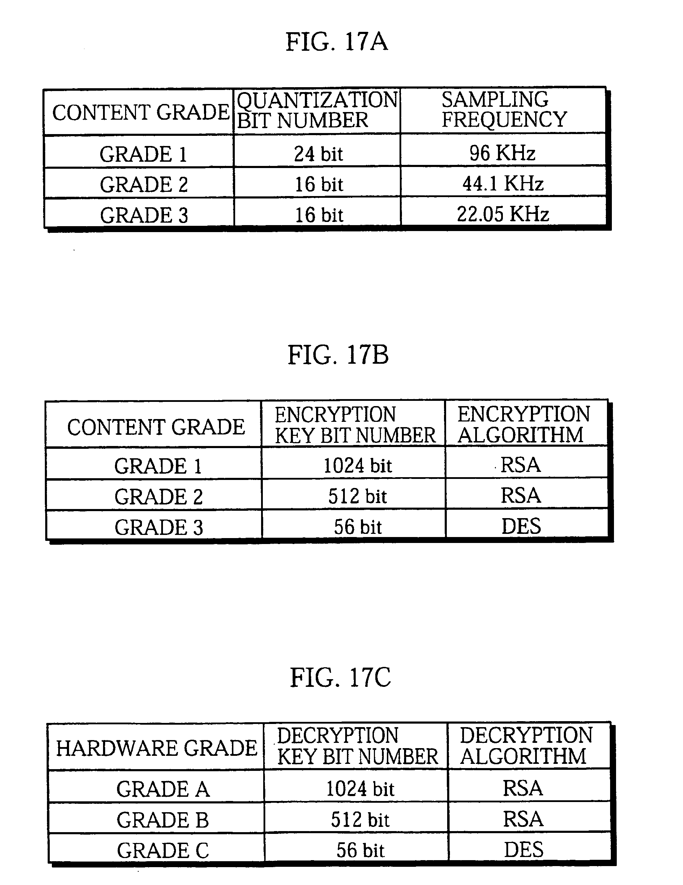

FIG. 17A shows an example of the first correspondence table. As shown in the figure, Grade 1 is associated with a pair of 24 bits as the quantization bit number and 96 KHz as the sampling frequency, Grade 2 with 16 bits as the quantization bit number and 44.1 KHz as the sampling frequency, and Grade 3 with 16 bits as the quantization bit number and 22.05 KHz as the sampling frequency, wherein a lower grade number indicates a higher content grade. In this way, a pair of a higher quantization bit number and a higher sampling frequency is associated with a higher content grade.

FIG. 17B shows an example of the second correspondence table. As shown in FIG. 17B, Grade 1 is associated with a pair of a 1024-bit encryption key and the RSA encryption algorithm, Grade 2 with a pair of a 512-bit encryption key and the RSA encryption algorithm, and Grade 3 with a pair of a 56-bit encryption key and the DES algorithm. Here, the RSA encryption algorithm is a public key system that provides higher security than the DES encryption algorithm which is a common key system. Encryption keys with higher bit numbers ensure higher security. In this way, a higher content grade is associated with an encryption key and an encryption algorithm that ensure higher security.

The content encrypting unit 708 refers to the first correspondence table and assigns a content grade out of Grades 1-3 to each content encoded and generated by the content encoding unit 706. The content encrypting unit 708 then refers to the second correspondence table and encrypts the content assigned a content grade using an encryption key and an encryption algorithm that are associated with the assigned content grade. For instance, when encrypting the retail content 710 that has been encoded by the content encoding unit 706 by quantizing at 24 bits and sampling at 96 KHz, the content encrypting unit 708 refers to the first correspondence table and assigns Grade 1 to the retail content 710. The content encrypting unit 708 then refers to the second correspondence table, generates a 1024-bit encryption key (a session key) associated with Grade 1, and encrypts the retail content 710 using the generated 1024-bit encryption key and the RSA algorithm associated with Grade 1. The content encrypting unit 708 then attaches the 1024-bit encryption key to the retail content 710 to which the above scrambling has been performed.

On the other hand, when encrypting the sample content 711 that has been encoded using a 16-bit quantization bit number and a 44.1-KHz sampling frequency by the content encoding unit 706, the content encrypting unit 708 assigns Grade 2 to the sample content 711, generates a 512-bit encryption key (a session key) associated with Grade 2, and encrypts the sample content 711 using the generated 512-bit encryption key and the RSA encryption algorithm associated with Grade 2. The content encrypting unit 708 then attaches the 512-bit encryption key to the sample content 711 for which the above scrambling has been performed.

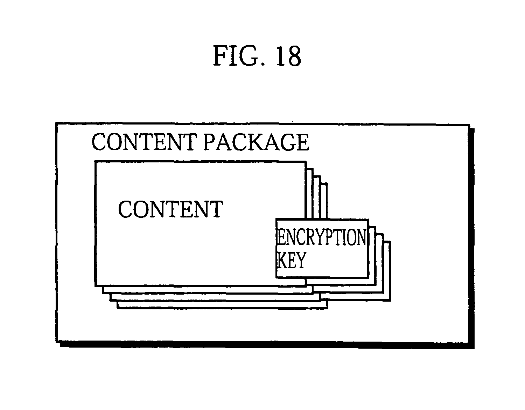

The content packaging unit 709 packages the retail content 710 and the sample content 711 that have been encrypted by the content encrypting unit 708 to generate a content package, and converts it into a form suitable for a distribution method. More specifically, if the content package is to be distributed via the Internet, a satellite broadcast, or a CATV cable, the content packaging unit 709 converts the content package into Transmission Control Protocol (TCP) packets or transport packets and outputs the generated packages. If the content package is to be distributed via a recording medium such as a CD-ROM or a DVD-ROM, the content packaging unit 709 converts the content package into a file in a Universal Disk Format (UDF) or the like, and records the converted file onto a CD-ROM or a DVD-ROM. FIG. 18 shows an example of a content package that has been packaged, but not yet converted by the content packaging unit 709. As shown in the figure, the content package contains a plurality of contents and is distributed to the content playback devices 801-809.

The following explains the content playback devices 801-809. Although the content playback devices 801-809 have different overall constructions as shown in FIG. 15, these devices have common functional units shown in FIG. 16, that is, a hardware-grade/decryption correspondence table storage unit 810, a hardware performance evaluation unit 811, a content unpack unit 812, a content decrypting unit 813, a content storing unit 814, and a content playback unit 815.

The hardware-grade/decryption correspondence table storage unit 810 stores a hardware-grade/decryption correspondence table that associates a plurality of hardware grades with a plurality of pairs that each consist of a decryption key bit number and a decryption algorithm name. Each hardware grade is associated with a different pair and indicates hardware performance of a content playback device.

More specifically, each hardware grade in this table is determined by whether hardware dedicated to the decryption of an encrypted content, that is, a copyright protection system is provided to a content playback device, and if so, decryption capability of the copyright protection system. These hardware grades are expressed in descending order as Grades A, B, and C. For instance, Grade A indicates that a copyright protection system is provided to a content playback device, and Grades B and C indicate that a copyright protection system is not provided to a content playback device. FIG. 17C shows the table stored in the hardware-grade/decryption correspondence table storage unit 810. In the table, Grade A is associated with a pair of a 1024-bit decryption key and the RSA decryption algorithm, Grade B with a pair of a 512-bit decryption key and the RSA decryption algorithm, and Grade C with a pair of a 56-bit decryption key and the DES decryption algorithm.

The hardware performance evaluation unit 811 evaluates hardware performance of the content playback device in which this unit is provided to calculate its grade by detecting whether the content playback device includes hardware dedicated to the decryption of an encrypted content and by calculating a memory size of the hardware that can be used for the decryption.

The content unpack unit 812 receives a content package from the content packaging unit 700 and unpacks the content package to obtain the retail content 710 and the sample content 711.

The content decrypting unit 813 refers to the hardware-grade/decryption correspondence table first and selects a decryption key and a decryption algorithm corresponding to the grade calculated by the hardware performance evaluation unit 811. Second, the content decrypting unit 813 separates only a content that can be decrypted by the selected decryption key and decryption algorithm out of the contents unpacked by the content unpack unit 812. Third, the content decrypting unit 813 decrypts the separated content using the decryption key and the decryption algorithm.

The following specifically explains decryption by the content decrypting unit 813 of the content playback device 801 which is a high-grade consumer playback device. When the content playback device 801 has dedicated hardware for the decryption, the hardware performance evaluation unit 811 assigns the playback device 801 a grade corresponding to Grade A in the table in the hardware-grade/decryption table storage unit 810. Following this, the content decrypting unit 813 refers to the table to select a pair associated with Grade A. As Grade A is associated with a pair of a 1024-bit decryption key and the RSA decryption algorithm, the content decrypting unit 813 selects this pair. After finding that the retail content 710 is encrypted by a 1024-bit encryption key and the RSA encryption algorithm, the content decrypting unit 813 separates only the retail content 710 from the contents unpacked by the content unpack unit 812. Following this, the content decrypting unit 813 decrypts the separated retail content 710 using the RSA decryption algorithm and the decryption key that has been provided in advance.

On the other hand, if a playback device is the content playback device 806 which is a personal computer that decrypts the content by running decryption software on general-purpose hardware, the hardware performance evaluation unit 811 assigns a grade corresponding to Grade C in the table in the hardware-grade/decryption table storage unit 810. The content decrypting unit 813 then refers to the table to select a pair associated with Grade C. As Grade C is associated with a pair of a 56-bit decryption key and the DES decryption algorithm, the content decrypting unit 813 selects this pair. After finding that the sample content 711 is encrypted by a 56-bit encryption key and the DES encryption algorithm, the content decrypting unit 813 separates only the sample content 711 from the contents unpacked by the content unpack unit 812. Following this, the content decrypting unit 813 extracts an encryption key attached to the sample content 711 from the content package to obtain the encryption key as a decryption key, which is possible because the DES algorithm is a common key system. The content decrypting unit 813 decrypts the separated sample content 711 using the extracted encryption key as the decryption key and the RSA decryption algorithm.

The content storage unit 814 stores a content decrypted by the content decrypting unit 813.

The content playback unit 815 reproduces the content that has been temporarily stored in the content storage unit 814.

As has been described, the content packaging device of the present embodiment generates the retail content 710 and the sample content 711, wherein the sample content 711 has a reproduction quality lower than the retail content 710, and encrypts the retail content 710 and the sample content 711 with different encryption methods having different security levels. The content packaging device then packages the retail content 710 and the sample content 711 as a content package and transmits the content package to content playback devices of different types. As a result, each content playback device can select a content from the transmitted content package according to the hardware performance of the content playback device. Accordingly, a content provider can transmit contents of differing qualities without needing to consider the different reproduction conditions of target content playback devices with the copyrights of the contents being protected.

### Sixth Embodiment

The sixth embodiment relates to a content packaging device that is a modification of the content packaging device of the fifth embodiment. The major difference between the two lies in that the content encoding unit 706 in the present embodiment encodes the start of a production to be distributed to generate a sample content and the rest of the distribution subject to generate a main content. The content packaging unit 709 packages the encoded main content and sample content to produce a content package.

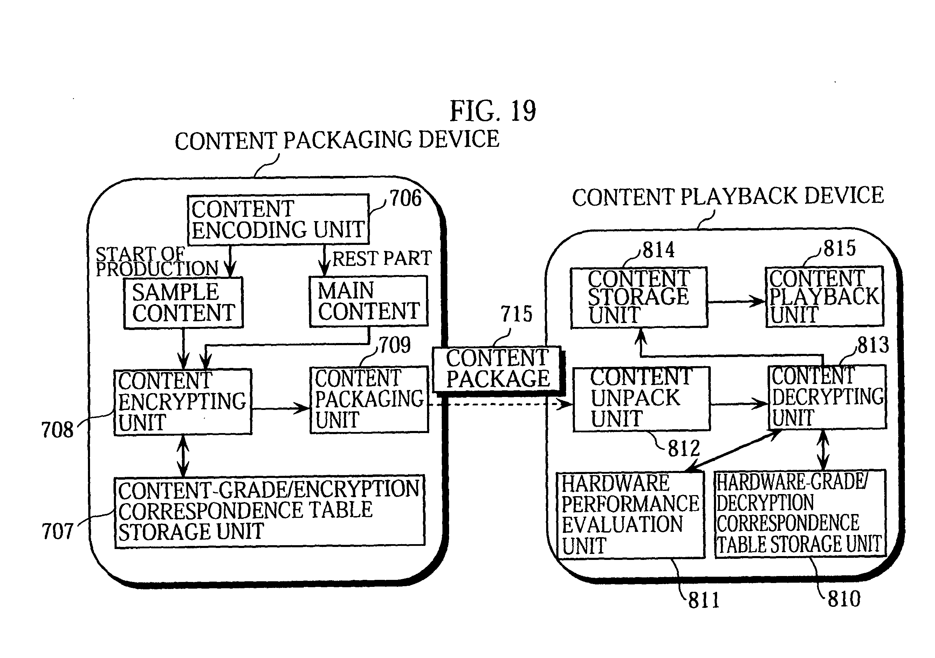

FIG. 19 shows constructions of the content packaging device 700 and content playback devices 801-809.

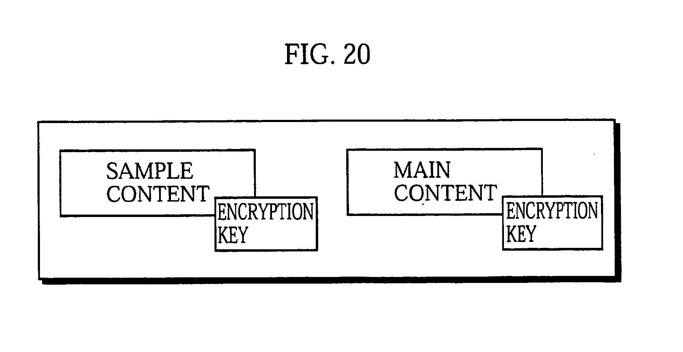

The content encrypting unit 708 assigns a predetermined grade to the sample content and a grade higher than the predetermined grade to the main content. The content encrypting unit 708 then refers to a table similar to the second correspondence table of the fifth embodiment and encrypts the graded content using an encryption key and an encryption algorithm that are associated with the assigned grade. As stated above, the content packaging unit 709 then packages the encrypted main content and sample content to generate the content package. FIG. 20 shows the content package packaged by the content packaging unit 709 of the present embodiment.

According to the present embodiment, a content package that has a smaller size than a content package in the fifth embodiment can be transmitted via each distribution method and recorded onto a recording medium such as a hard disk or a CD-ROM using smaller storage areas.

Although the present invention has been described based on the first to sixth embodiments, these embodiments are only examples by which optimal effects of the invention can be obtained. The present invention therefore can be modified without changing its essence. The following describes modifications that are considered to be representative.
(a) In the first to fourth embodiments, the purchased-copy recording medium 650 is described as an optical memory disc such as a DVD-RAM, though the purchased-copy recording medium 650 may alternatively be a hard disk or a semiconductor memory.
(b) The third and the fourth embodiments state that the fee information storage unit 312 is achieved by a hard disk of a personal computer, though the fee information storage unit 312 is not limited to such and may be achieved by a recording medium such as an IC (Integrated Circuit) card.
(c) The digital data recording device 500 described in the first to fourth embodiments is described as being achieved by a personal computer used in the home, although the digital data recording device 500 may be installed in a shop such as a record shop.
(d) Although the first to fourth embodiments have been described assuming that information distributed by a provider is a music content, the information to be distributed is not limited to a music content. It is naturally possible to distribute an image content, text data, or a combination of an image content and text data.
(e) In the fifth embodiment, the retail content 710 and the sample content 711, which are two types of contents having different reproduction qualities, are generated and distributed, although it is possible to generate and distribute three or more types of contents having different reproduction qualities.
(f) The procedures described in the first to sixth embodiments such as those shown in the flowchart of FIGs. 10, 12, and 14 may be written as programs in machine language and recorded onto a recording medium to be distributed and sold. Such a recording medium may be an IC card, an optical memory disc, a floppy disc, or the like. By installing the above programs into a general-purpose computer and by having the general-purpose computer execute the installed programs, functions of the digital data recording devices and the digital playback device of the present invention can be achieved.

### Industrial Applicability

The recording medium of the present invention is useful for selling contents in a convenient way and at a low price, and therefore has industrial applicability in the music industry and the movie industry that produce and sell such a content.

The digital data recording device and the digital data playback device of the present invention have industrial applicability in the manufacturing industry for a device that records the above content onto a recording medium, a device that reproduces a content recorded on a recording medium, and a device that records a content from a recording medium onto another recording medium.

## Claims

1. A content playback device adapted to reproduce a content extracted from a package, comprising:
obtaining means (105) for obtaining from a periphery of the content playback device, the package containing a plurality of contents that have each been encrypted using a different cryptosystem; and
**characterized by** additionally comprising:
evaluation means (811) for evaluating a hardware performance of the content playback device to calculate a grade indicating the hardware performance,
table storing means (810) for storing a table containing a plurality of grades and a plurality of pairs, each pair consisting of a decryption key information and a decryption algorithm information and being associated with a different grade out of the grades calculated by the evaluation means, and
decrypting means (813) for referring to the table to select a pair associated with the calculated grade, extracting from the obtained package the content that can be decrypted using a decryption key and a decryption algorithm indicated by the selected pair.

2. A content playback device according to claim 1, wherein
the content to be reproduced is either a) a sample content (711) or b) a main content that are contained in a package, wherein the sample content (711) is to be encrypted with lower security than the main content.

3. A computer-readable recording medium storing a playback program adapted to have a computer reproduce a content extracted from a package according to a content playback device according to claim 1 or 2.

4. A content playback method used by a computer to reproduce a content extracted from a package, the computer including a storing unit for storing a table containing a plurality of grades and a plurality of pairs, each pair consisting of a decryption key information and a decryption algorithm information and being associated with a different grade,
wherein the content playback method includes:
an evaluation step for evaluating a hardware performance of the computer to calculate a grade indicating the hardware performance;
an obtaining step for obtaining from a periphery of the computer, the package containing a plurality of contents that have each been encrypted using a different cryptosystem; and
a decrypting step for referring to the table to select a pair associated with the calculated grade, extracting from the obtained package the content that can be decrypted using a decryption key and a decryption algorithm indicated by the selected pair, and decrypting the extracted content.

## Patentansprüche

1. Inhalts-Wiedergabevorrichtung, die zum Wiedergeben eines aus einem Paket extrahierten Inhalts eingerichtet ist, wobei sie umfasst:
eine Erfassungseinrichtung (105) zum Erfassen von einer Peripherie der Inhalts-Wiedergabevorrichtung her, wobei das Paket eine Vielzahl von Inhalten enthält, die jeweils unter Verwendung eines anderen Verschlüsselungssystems verschlüsselt worden sind; und
**dadurch gekennzeichnet, dass** sie zusätzlich umfasst:
eine Bewertungseinrichtung (811) zum Bewerten einer Hardware-Leistung der Inhalts-Wiedergabevorrichtung, um eine Klasse zu berechnen, die die Hardware-Leistung anzeigt,
eine Tabellenspeichereinrichtung (810) zum Speichern einer Tabelle, die eine Vielzahl von Klassen und eine Vielzahl von Paaren enthält, wobei jedes Paar aus einer Entschlüsselungsschlüssel-Information und einer Entschlüsselungsalgorithmus-Information besteht und mit einer anderen Klasse der durch die Bewertungseinrichtung berechneten Klassen verbunden ist, und
eine Entschlüsselungseinrichtung (813), mit der auf die Tabelle Bezug genommen wird, um ein mit der berechneten Klasse verbundenes Paar auszuwählen und aus dem erfassten Paket den Inhalt zu extrahieren, der unter Verwendung eines Entschlüsselungsschlüssels und eines Entschlüsselungsalgorithmus entschlüsselt werden kann, die durch das ausgewählte Paar angezeigt werden.

2. Inhalts-Wiedergabevorrichtung nach Anspruch 1, wobei
der wiederzugebende Inhalt entweder a) ein Muster-Inhalt (711) oder b) ein Haupt-Inhalt ist, die in einem Paket enthalten sind, wobei der Muster-Inhalt (711) mit niedrigerer Sicherheit zu verschlüsseln ist als der Haupt-Inhalt.

3. Computerlesbares Aufzeichnungsmedium, das ein Wiedergabeprogramm speichert, das so eingerichtet ist, dass es einen Computer veranlasst, einen aus einem Paket extrahierten Inhalt gemäß einer Inhalts-Wiedergabevorrichtung nach Anspruch 1 oder 2 wiederzugeben.

4. Inhalts-Wiedergabeverfahren, das von einem Computer verwendet wird, um einen aus einem Paket extrahierten Inhalt wiederzugeben, wobei der Computer eine Speichereinheit zum Speichern einer Tabelle enthält, die eine Vielzahl von Klassen und eine Vielzahl von Paaren enthält, und jedes Paar aus einer Entschlüsselungsschlüssel-Information und einer Entschlüsselungsalgorithmus-Information besteht und mit einer anderen Klasse verbunden ist,
wobei das Inhalts-Wiedergabeverfahren enthält:
einen Bewertungsschritt, mit dem eine Hardware-Leistung des Computers bewertet wird, um eine Klasse zu berechnen, die die Hardware-Leistung anzeigt;
einen Erfassungsschritt, mit dem von einer Peripherie des Computers her das Paket erfasst wird, das eine Vielzahl von Inhalten enthält, die jeweils unter Verwendung eines anderen Verschlüsselungssystems verschlüsselt worden sind; und
einen Entschlüsselungsschritt, mit dem auf die Tabelle Bezug genommen wird, um ein mit der berechneten Klasse verbundenes Paar auszuwählen und aus dem erfassten Paket den Inhalt zu extrahieren, der unter Verwendung eines Entschlüsselungsschlüssels und eines Entschlüsselungsalgorithmus entschlüsselt werden kann, die durch das ausgewählte Paar angezeigt werden, und der extrahierte Inhalt entschlüsselt wird.

## Revendications

1. Dispositif de lecture de contenu adapté pour reproduire un contenu extrait d'un groupement, comprenant:
un moyen d'obtention (105) pour obtenir à partir d'une périphérie du dispositif de lecture de contenu, le groupement contenant une pluralité de contenus, chaque contenu ayant été crypté en utilisant un système cryptographique différent; et
**caractérisé par** le fait de comprendre en plus:
un moyen d'évaluation (811) pour évaluer une performance matériel du dispositif de lecture de contenu afin de calculer un grade indiquant la performance matériel,
un moyen (810) de stockage de table pour stocker une table contenant une pluralité de grades et une pluralité de paires, chaque paire se composant d'une information de clé de décryptage et d'une information d'algorithme de décryptage et étant associée à un grade différent parmi les grades calculés par le moyen d'évaluation, et
un moyen de décryptage (813) pour se rapporter à la table afin de sélectionner une paire associée au grade calculé, extraire du groupement obtenu le contenu qui peut être décrypté en utilisant une clé de décryptage et un algorithme de décryptage indiqués par la paire sélectionnée.

2. Dispositif de lecture de contenu selon la revendication 1, dans lequel
le contenu a reproduire est soit a) un contenu échantillon (711) soit b) un contenu principal qui sont contenus dans un groupement, où le contenu échantillon (711) doit être crypté avec moins de sécurité que le contenu principal.

3. Support d'enregistrement lisible par ordinateur stockant un programme de lecture adapté pour amener un ordinateur à reproduire un contenu extrait d'un groupement selon un dispositif de lecture de contenu selon la revendication 1 ou 2.

4. Procédé de lecture de contenu utilisé par un ordinateur pour reproduire un contenu extrait d'un groupement, l'ordinateur incluant une unité de stockage pour stocker un tableau contenant une pluralité de grades et une pluralité de paires, chaque paire se composant d'une information de clé de décryptage et une information d'algorithme de décryptage et étant associée à un grade différent,
dans lequel le procédé de lecture de contenu inclut:
une étape d'évaluation pour évaluer une performance de matériel de l'ordinateur afin de calculer un grade indiquant la performance de matériel,
une étape d'obtention pour obtenir à partir d'une périphérie de l'ordinateur, le groupement contenant une pluralité de contenus qui ont été cryptés chacun en utilisant un système cryptographique différent; et
une étape de décryptage pour se référer au tableau afin de sélectionner une paire associée au grade calculé, extraire du groupement obtenu le contenu qui peut être décrypté en utilisant une clé de décryptage et un algorithme de décryptage indiqués par la paire sélectionnée, et décrypter le contenu extrait.
